# EUROPEAN PATENT SPECIFICATION

(11) **EP 1 889 240 B1**
(45) Date of publication and mention of the grant of the patent: **05.08.2009**
(21) Application number: 06747461.9
(22) Date of filing: 26.05.2006
(51) Int. Cl.: G08G 1/09

(54) **IDENTIFYING AND USING TRAFFIC INFORMATION INCLUDING MEDIA INFORMATION**
IDENTIFIZIEREN UND VERWENDEN VON VERKEHRSINFORMATIONEN, DIE MEDIA-INFORMATIONEN ENTHALTEN
IDENTIFICATION ET UTILISATION D'INFORMATIONS DE TRAFIC COMPRENANT DES INFORMATIONS MULTIMEDIA

(30) Priority: 27.05.2005 US 684971 P; 19.10.2005 KR 20050098754
(43) Date of publication of application: 20.02.2008
(60) Divisional application: 09159699.9
(73) Proprietor: LG Electronics, Inc., Seoul 150-010 (KR)
(72) Inventor: MOON, Kyoung Soo, Seoul 137-784 (KR); KIM, Jun, Seoul 137-779 (KR); LEE, Sang Hyup, Seoul 156-775 (KR)
(74) Representative: Cabinet Plasseraud
(86) International application number: PCT/KR2006/002012
(87) International publication number: WO 2006/126853

(56) References cited:
- WO-A-02/13161
- WO-A1-00/30058
- DE-A1- 10 060 599
- JP-A- 2001 082 967
- JP-A- 2005 056 061
- KR-A- 2004 084 374
- US-A1- 2004 198 339
- US-B1- 6 232 917
- US-B1- 6 687 611

## Description

### 1. Technical Field

This disclosure relates to encoding and decoding traffic information that includes media information associated with traffic information or locations.

### 2. Background Art

With the advancement in digital signal processing and communication technologies, radio and TV broadcasts are being digitalized. Digital broadcasting enables provision of various information (e.g., news, stock prices, weather, traffic information, etc.) as well as audio and video content.

WO 02/13161 discloses a method for transmitting digitally encoded traffic messages wherein the traffic messages are transmitted according to a standardized pattern, especially according to the TMC method. A header is prefixed to the digitally encoded traffic messages, at least one further information following said digitally encoded traffic message and one of these pieces of information containing a location description. The further pieces of information are subdivided into classes, every class containing a class name and at least one packet. One of these classes contains data of presentation.

### 3. Disclosure of Invention

In one general aspect a method for identifying and using traffic information including media information, according to claim 1, is provided.

Implementations may include one or more additional features. For instance, in the method, media within th media object may represent traffic conditions experienced at the location. Media within the media object may represent weather conditions experienced at the location. Media within the media object may represent attractions found at the location. An indication of a length of the received traffic data and a size related to the media object may be received.

Also, in the method, receiving traffic data for a location may include receiving a media-format identifier that enables determination of a format of the media object. Identifying the media object may include identifying, based on both of the determined type of the media object and the media-format identifier, the format of the media object included within the received traffic data. Enabling retrieval of the media object may include enabling retrieval of the media object based in part on the identified format of the media object. The media-type identifier may enable a determination that the media object is one of several media types indicated by the media-type identifier. The several media types may include at least one of audio media, visual media, video media, audio visual media, and hypertext media.

The method may include determining, based on the media-type identifier, that the media object is audio media and may include determining, based on the determination that the media object is audio media and based on the media-format identifier included in the traffic data, whether the media object is formatted according to at least one of MPEG 1 audio layer I, MPEG I audio layer II, MPEG 1 audio layer III and uncompressed PCM audio.

The method may also include determining, based on the media-type identifier, that the media object is visual media and may also include determining, based on the determination that the media object is visual media and based on the media-format identifier included in the traffic data, whether the media object is formatted according to at least one of GIF, JFIF, BMP, PNG, and MNG.

The method may further include determining, based on the media-type identifier, that the media object is video media and may further include determining, based on the determination that the media object is visual media and based on the media-format identifier included in the traffic data, whether the media object is at least one of MPEG 1 video, MPEG 2 video, MPEG 4 video, H.263, and H.264.

The method may also include determining, based on the media-type identifier, that the media object is audio visual media and may also include determining, based on the determination that the media object is audio visual media and based on the media-format identifier included in the traffic data, whether the media object is formatted according to at least one of AV1, ASF, WMV and MOV.

The method may further include determining, based on the media-type identifier, that the media object is hypertext media and may further include determining, based on the determination that the media object is hypertext media and based on the media-format identifier included in the traffic data, whether the media object is at least one of HTML and XML.

Also, the method may further include receiving information corresponding to a message management structure including information corresponding to a generation time of information reflected in the traffic data. The generation time included within the received message management structure may relate to a plurality of message component structures that correspond to more than one of a predicted or current traffic tendency, a predicted or current amount of traffic, a predicted or current speed, or a predicted or current time to traverse a particular link. One or more of the message component structures may be associated with the information corresponding to media.

In another general aspect, a traffic information communication device for identifying and using traffic information including media information, according to claim 20, is provided.

Implementations may include one or more additional features. For instance, the media within the media object may represent at least one of traffic conditions experienced at the location, weather conditions experienced at the location, and attractions found at the location. The processing device of the traffic information communication device according to the present invention is configured to receive traffic data including information corresponding to a version number of information reflected in the traffic data. The version number may be associated with a specific syntax of the data where any one of multiple syntaxes may be used. The processing device may be configured to receive information corresponding to a message management structure including information corresponding to a generation time of information reflected in the traffic data. The processing device may be configured to receive information corresponding to a length of the received data and an indication of size related to the media object.

In the device, the data receiving interface may be further configured to receive media information corresponding to a location including a media-format identifier that enables determination of a format of the media object and the processing device may be further configured to process the received media information and to determine media information based at least in part on the information received. The processing device may be configured to enable a determination, based on the media-type identifier, that the media object is one of several media types indicated by the media-type identifier, wherein the several media types include at least one of audio media, visual media, video media, audio visual media, and hypertext media.

Also, in the method, the processing device may be configured to determine, based on the media-type identifier, that the media object is audio media. The processing device may be configured to enable a determination, based on the determination that the media object is audio media and based on the media-format identifier included in the traffic data, of whether the media object is formatted according to at least one of MPEG 1 audio layer I, MPEG I audio layer II, MPEG 1 audio layer III and uncompressed PCM audio.

Further, in the method, the processing device may be configured to determine, based on the media-type identifier, that the media object is visual media. The processing device may be configured to enable a determination, based on the determination that the media object is visual media and based on the media-format identifier included in the traffic data, of whether the media object is formatted according to at least one of GIF, JFIF, BMP, PNG, and MNG.

Also, in the method, the processing device may be configured to determine, based on the media-type identifier, that the media object is video media. The processing device may be configured to enable a determination, based on the determination that the media object is visual media and based on the media-format identifier included in the traffic data, of whether the media object is at least one of MPEG 1 video, MPEG 2 video, MPEG 4 video, H.263, and H.264.

Further, in the method, the processing device may be configured to determine, based on the media-type identifier, that the media object is audio visual media. The processing device may be configured to enable a determination, based on the determination that the media object is audio visual media and based on the media-format identifier included in the traffic data, of whether the media object is formatted according to at least one of AV1, ASF, WMV and MOV.

Also, in the method, the processing device may be configured to determine, based on the media-type identifier, that the media object is hypertext media. The processing device may be configured to enable a determination, based on the determination that the media object is hypertext media and based on the media-format identifier included in the traffic data, of whether the media object is at least one of HTML and XML.

The device may include means for receiving traffic data for a location, the traffic data including a media object and a media-type identifier that enables a determination of a type associated with the media object and means for determining, based on the media-type identifier, the type of the media object included within the received traffic data. The device also includes means for identifying the media object within the received traffic data and means for enabling retrieval of the media object based in part on the identified media object.

Implementations may include one or more additional features. For instance, means for receiving traffic data for a location may include means for receiving a media-format identifier that enables determination of a format of the media object. Means for identifying the media object may include means for identifying, based on both of the determined type of the media object and the media-format identifier, the format of the media object included within the received traffic data. Means for enabling retrieval of the media object may include means for enabling retrieval of the media object

The details of one or more implementations are set forth in the accompanying drawings and the description below. Other features will be apparent from the description and drawings, and from the claims.

### 4. Brief Description of Drawings

FIG. 1 illustrates a network over which traffic information is provided;
FIG. 2 illustrates a format of the traffic information transmitted by radio;
FIGS. 3A-3D illustrate a transmission format of a congestion traffic information component included in a CTT event container;

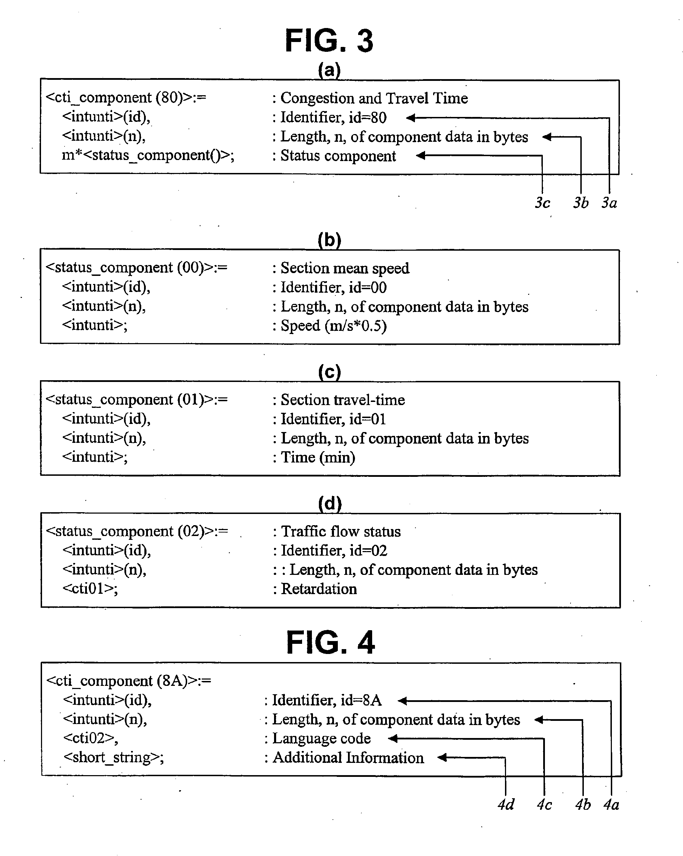

FIG. 3A illustrates syntax of the congestion traffic information component included in the CTT event container;
FIGS. 3B through 3D illustrate syntax of status components including information relating to a section mean speed, a section travel-time, and a flow status in the component of FIG. 3A, respectively;
FIG. 4 illustrates a syntax of an additional information component that may be included in the CTT event container;

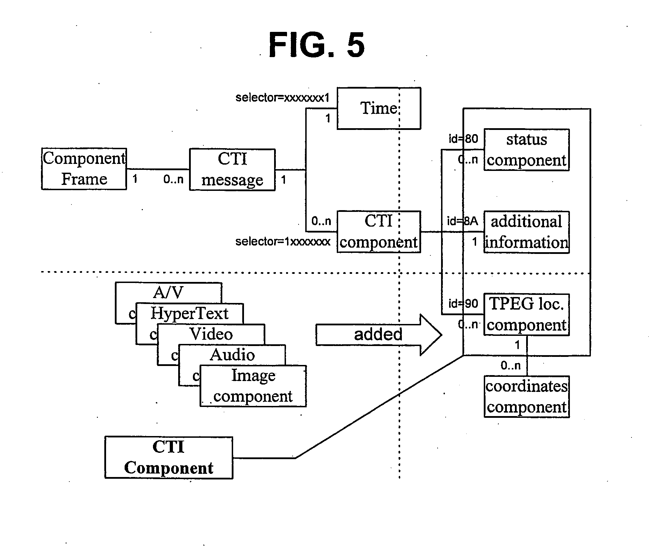

FIG. 5 illustrates a multimedia data component added to the CTT event container;

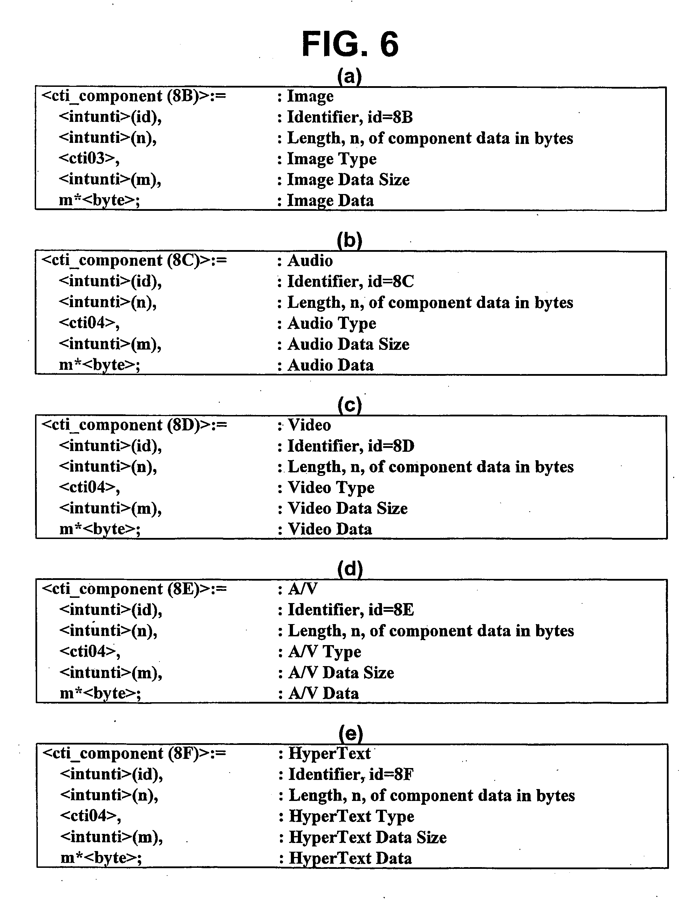

FIGS. 6A through 6E illustrate a syntax of CTT components, included in the CTT event container, carrying various multimedia data;

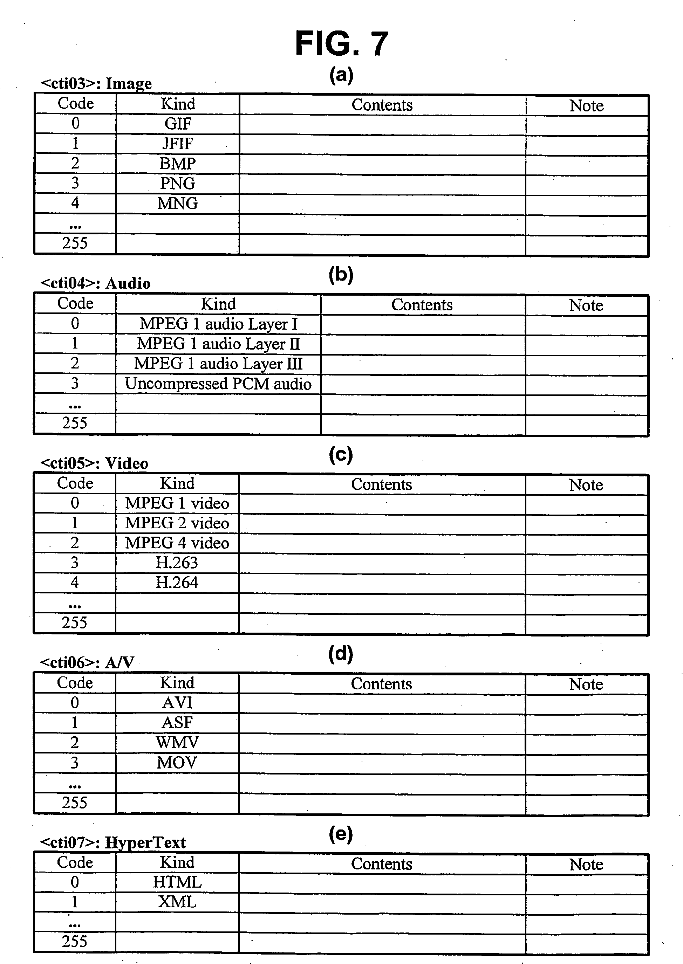

FIGS. 7A through 7E illustrate a table defining a type of the multimedia, respectively; and

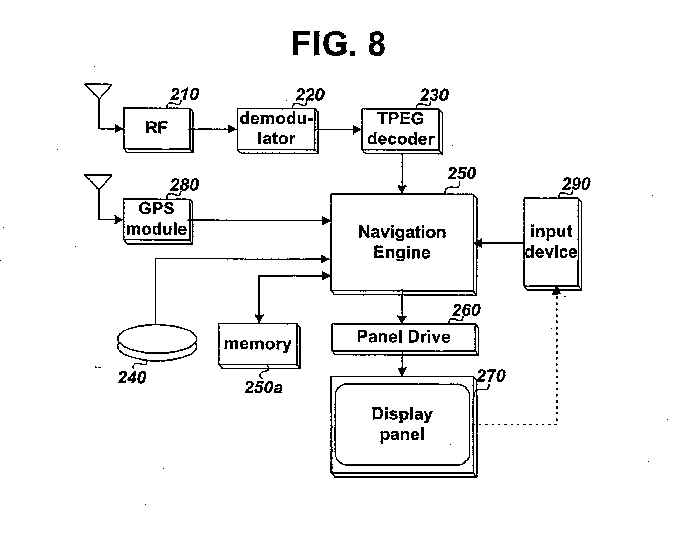

FIG. 8 illustrates a structure of a navigation terminal for receiving traffic information from a server.

### 5. Modes for Carrying out the Invention

One such use for digital broadcasts is to satisfy an existing demand for traffic information. Proposals that involve the use of digital broadcasts for this purpose contemplate the use of standardized formatting of traffic information to be broadcast. This approach may be used to enable the use of traffic information receiving terminals made by different manufacturers, which each could be configured to detect and interpret traffic information broadcast in the same way.

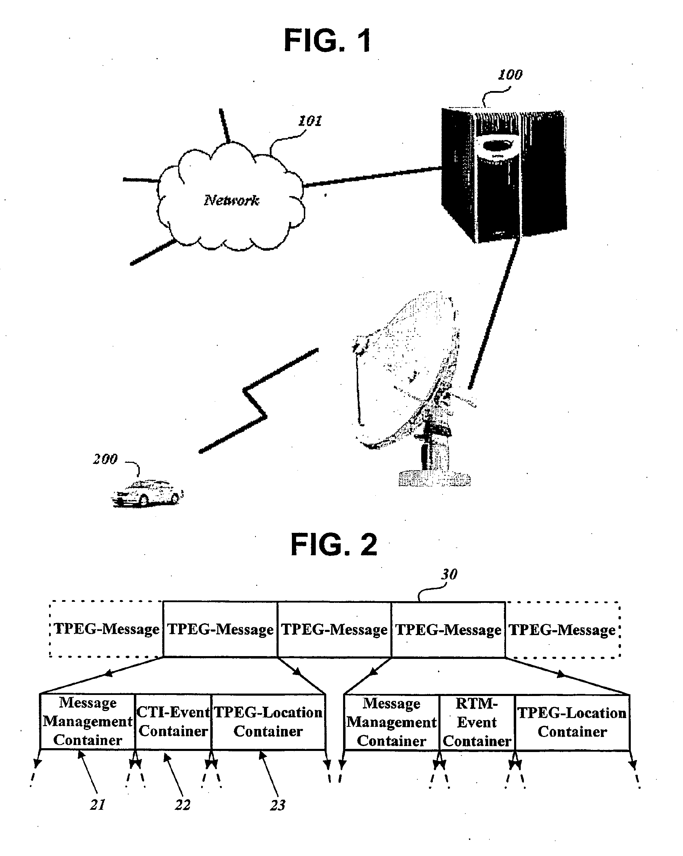

A process of encoding and decoding traffic information using a radio signal is described with reference to FIG. 1, which schematically depicts a network over which the traffic information is provided according to an implementation. In the network 101 of FIG. 1, by way of example, a traffic information providing server 210 of a broadcasting station reconfigures various congestion traffic information aggregated from an operator's input, another server over the network 101, or a probe car and broadcasts the reconfigured information by radio so that a traffic information receiving terminal such as a navigation device installed to a car 200 may receive the information.

The congestion traffic information broadcast by the traffic information providing server 100 via radio waves includes a sequence of message segments (hereafter, referred to as Transport Protocol Expert Group (TPEG) messages) as shown in FIG. 2. Among the sequence, one message segment, that is, the TPEG message includes a message management container 21, a congestion and travel-time information (CTT or CTI) event container 22, and a TPEG location container 23. It is noted that a TPEG message 30 conveying traffic information other than the CTT event, e.g., road traffic message (RTM) event, public transport information (PTI), weather information (WEA) are included in the sequence.

Overall contents relating to the message may be included in the message management container 21. Information relating to a message identification (ID), a version number, date and time, and a message generation time may be included in the message management container 21. The CTT event container 22 includes current traffic information of each link (road section) and additional information. The TPEG location container 23 includes location information relating to the link.

The CTT event container 22 may include a plurality of CTT components. If the CTT component includes the congestion traffic information, the CTT component is assigned an ID of 80h and includes status components indicative of the section mean speed, the section travel-time, and the retardation. In the description, specific IDs are described as assignments to structures associated with specific information. The actual value of an assigned ID (e.g., 80h) is exemplary, and different implementations may assign different values for specific associations or circumstances. Thus, the CTT components and status components may be used to provide various different types of data that may be signaled based on an identifier. For example, FIG. 3B and FIG. 6A illustrate a component with an identifier of 00 and 8B signaling, respectfully, speed and image media information.

In one implementation, the CTT event container 22 includes one or more CTT components that include a status information 24 portion, and a multimedia descriptor 25 portion that corresponds to the status information 24 portion. The status information 24 portion may include information directed to the status of a specific link or location. For example, the status information portion 24 may specify a level of traffic congestion, a speed of a link, or a travel time to traverse a link. The multimedia descriptor 25 portion includes one or more multimedia objects, such as, for example audio, video, images, hypertext, or a combination thereof, that may correspond to one more links and locations. FIG. 2 shows an image object 26 and an audio object 27 as an example of the contents of the multimedia descriptor 25. The image object 26 and the audio object 27 may be configured to be rendered concurrently.

FIG. 3A illustrates syntax of the congestion traffic information component. The ID of 80h is assigned to the congestion traffic information component as indicated by 3a, more than one (m-ary) status components are included as indicated by 3c, and a field is included to represent the total data size of the included status components in bytes as indicated by 3b.

Each status component includes the information relating to the section mean speed, the section travel-time, and/or the retardation as the syntax as shown in FIGS. 3B through 3D. An ID of 00 is assigned to the section mean speed, an ID of 01 is assigned to the section travel-time, and an ID of 02 is assigned to the retardation.

If an ID of 8Ah is assigned, the CTT component includes additional information or auxiliary information relating to the traffic information in a text form. FIG. 4 depicts syntax of the additional information component included in the CTT event container. The additional information component is assigned the ID of 8Ah as indicated by 4a, and includes a language code indicated by 4c, additional information configured in text form indicated by 4d, and a field representing the total data size of the components in bytes as indicated by 4b.

Since the message carried in the CTT event container is subordinate to the location information, the CTT message includes the location information. If the CTT component includes location information, the CTT component is assigned an ID of 90h and includes more than one TPEG location sub-container TPEG_loc_container.

According to an implementation, to transmit multimedia data, a multimedia CTT component relating to, for example, still image, audio, video, A/V, and hypertext, is included with the CTT event container as shown in FIG. 5.

Such a multimedia CTT component may include contents relating to the congestion traffic information component currently transmitted, e.g., still image, audio, and video such as animation that have different contents according to, for example, the section mean speed. For example, in one implementation, if a mean speed is below a threshold, a still image depicting slow moving traffic is included in the multimedia CTT component. If the mean speed is above the threshold, a still image depicting fast moving traffic is included in the multimedia CTT component.

Also, the multimedia CTT component may include contents relating to the location information transmitted together with the congestion traffic information. In more detail, the information as to the location of the congestion traffic information currently transmitted, such as, surrounding traffic condition, gas station, parking lot, historic place, accommodations, shopping facility, food, language (dialect) may be transmitted in the form of audio, video, and still image. For example, in one implementation, a location along a landmark may include a multimedia component associated with the location. Specifically, a CTT component associated with a link along the Washington Monument may include a multimedia CTT component including an image of the monument. Also, in various implementations, an image may be transmitted depicted various icons detailing the existence of structures at or near a location. Specifically, a multimedia CTT component may include an image depicting an icon for a restaurant, parking, and a shopping mall for a location including such features.

Moreover, the multimedia CTT component may include data representing contents as to a date and time corresponding to the current congestion traffic information, for example, weather, historical events which occurred on that day, in the multimedia such as audio, video, and still image. In one implementation, if a location is experiencing severe weather, a video may be included in a multimedia CTT component summarizing a weather report for the location.

FIGS. 6A through 6E depict structures of the CTT component which is included in the CTT event container and transmits various multimedia data.

In various implementations, the still image component in FIG. 6A is assigned an ID of 8Bh, and may include a field representing the total data size of the component in bytes, a still image type <cti03>, a field representing the data size of the still image in bytes, still image data. In particular, the field representing the total data size may represent the total amount of data including individual portions of data associated with the field representing the data size of the still image, the still image type <cti03>, and the still image data.

The audio component in FIG. 6B is assigned an ID of 8Ch, and may include a field representing the total data size of the component in bytes, an audio type <cti04>, a field representing the size of the audio data in bytes, and audio data.

The video component in FIG. 6C is assigned an ID of 8Dh, and may include a field representing the total data size of the component in bytes, a video audio type <cti05>, a field representing the size of the video data in bytes, and video data.

The A/V component in FIG. 6D is assigned an ID of 8Eh, and may include a field representing the total data size of the component in bytes, an A/V type <cti06>, a field representing the size of the A/V data in bytes, and audio data.

The hyper text component in FIG. 6E is assigned an ID of 8Fh, and may include a field representing the total data size of the component in bytes, a hyper text type <cti07>, a field representing the size of the hyper text data in bytes, and hyper text data.

The size of the multimedia data such as the still image, the audio, the video, the A/V, and the hypertext included in each multimedia component can be derived from the field representing the total data size of the component. Thus, the field representing the size of the multimedia data included in the multimedia component may be omitted.

FIGS. 6A-6E are example structures included in the CTT event container configured to transmit various multimedia data, and other or different structures may be included. For example, an animation component enabling the display of a software based animation may be included.

According to one implementation, <cti03>, <cti04>, <cti05>, <cti06>, and <cti07> define the type of the still image, the audio, the video, the A/V, and the hypertext, respectively. FIGS. 7A through 7E show tables defining kinds of the multimedia type, respectively.

Referring to FIG. 7A, the still image type <cti03> arranges GIF, JFIF, BMP, PNG, MNG and the like, with 0 through 4 assigned respectively. In FIG. 7B, the audio type <cti04> arranges MPEG 1 audio layer I, MPEG 1 audio layer II, MPEG 1 audio layer III, Uncompressed PCM audio and the like, with 0 through 3 assigned respectively.

In FIG. 7C, the video type <cti05> arranges MPEG 1 video, MPEG 2 video, MPEG 4 video, H.263, H.264 and the like, with 0 through 4 assigned respectively. In FIG. 7D, the A/V type <cti06> arranges AVI, ASF, WMV, MOV and the like, with 0 through 3 assigned respectively. In FIG. 7E, the hypertext type <cti07> arranges HTML, XML and the like, with 0 and 1 assigned respectively.

It should be appreciated that the IDs 8B through 8F assigned to the multimedia components, the tables <cti03> through <cti07> defining the type of the multimedia, and the kinds and the codes arranged in the tables are exemplified to ease understanding. Thus, they are not limited to any examples and can be changed.

Instead of assigning a separate component ID to each multimedia data, all the multimedia data may be carried by a multimedia component having the same ID. More specifically, the ID of 8Bh, for example, is assigned to a multimedia component including the multimedia data, the tables defining the kinds of the multimedia data types in FIGS. 7A through 7E are combined to a single table, and the single table, for example, <cit03> defines the types of the multimedia data.

In <cti03> defining the types of the multimedia data, a range of a value may be classified and defined for each multimedia data kind. By way of example, the still image type is '0Xh', the audio type is '1Xh', the video type is '2Xh', the A/V type is '3Xh', and the hypertext type '4Xh' (X ranges from 0 to F) . As a result, a decoder may confirm the kind of the multimedia data based on the type of the multimedia data included in the multimedia component.

The server 100 may configure the current congestion traffic information and the location information as shown in FIGS. 3 and 6 according to the current traffic information aggregated through several paths and a stored traffic information database, and may transmit the configured information to the traffic information receiving terminal. Additionally, the server 100 may convert contents relating to the traffic information to various multimedia data such as text, still image, audio, video, A/V, hyper text and the like, and may load the converted multimedia data in the component to transmit, a shown in FIG. 4 or FIGS. 5A through 5E.

FTG. 8 depicts a structure of a navigation terminal installed to a vehicle to receive the traffic information from the server 100 according to an implementation. FIG. 8 is an example implementation of a system for receiving and utilizing traffic information. Other systems may be organized differently or include different components.

In FIG. 8, the navigation terminal includes a tuner 210, a demodulator 220, a TPEG decoder 230, a global positioning system (GPS) module 280, a storage structure 240, an input device 290, a navigation engine 250, a memory 250a, a display panel 270, and a panel driver 260. The tuner 210 outputs the modulated traffic information signal by tuning a signal band over which the traffic information is transmitted. The demodulator 220 outputs the traffic information signal by demodulating the modulated traffic information signal. The TPEG decoder 230 acquires various traffic information by decoding the demodulated traffic information signal. The GPS module 280 receives satellite signals from a plurality of low earth orbit satellites and acquires the current location (longitude, latitude, and height) . The storage structure 240 stores a digital map including information about links and nodes, and diverse graphical information. The input device 290 receives a user's input. The navigation engine 250 controls an output to the display based on the user's input, the current location, and the acquired traffic information. The memory 250a temporarily stores data. The display panel 270 displays video. The display panel 270 may be a liquid crystal display (LCD) or organic light emitting diodes (OLED). The panel drive 260 applies a driving signal corresponding to graphical presentation to be displayed to the display panel 270. The input device 290 may be a touch screen equipped to the display panel 270.

The navigation engine 250 may include a decoding module for various multimedia data to reproduce the multimedia data received together with the traffic information.

The tuner 210 tunes the signal transmitted from the server 100, and the demodulator 220 demodulates and outputs the tuned signal according to a preset scheme. Next, the TPEG decoder 230 decodes the demodulated signal to the TPEG message sequence as configured in FIG. 2, analyzes TPEG messages in the message sequence, and then provides the navigation engine 250 with the necessary information and/or the control signal according to the message contents.

The TPEG decoder 230 extracts the data/time and the message generation time from the message management container in each TPEG message, and checks whether a subsequent container is the CTT event container based on the 'message element' (i.e. an identifier) . If the CTT event container follows, the TPEG decoder 230 provides the navigation engine 250 with the information acquired from the CTT components in the container so that the navigation engine 250 takes charge of the display of the traffic information and/or the reproduction of the multimedia data. Providing the navigation engine 250 with the information may include determining, based on identifiers, that the traffic information includes a message management container including statues information within various message components within the message management container. The components may each include different status information associated with different links or locations and identifiers associated with the different status information. The containers and components may each include information associated with a generation time, version number, data length, and identifiers of included information.

The TPEG decoder 230 checks based on the ID in the CTT component whether the CTT component includes the congestion traffic information, the additional information, or the multimedia data. The TPEG decoder 230 analyzes the congestion traffic information or the additional information included in the CTT component and provides the analyzed information to the navigation engine 250. Also, the TPEG decoder 230 checks the kind and the type of the multimedia data included in the CTT component using the ID and/or the type information included in the CTT component, and provides the checked kind and/or type to the navigation engine 250. The multimedia data is extracted from the CTT component and also provided to the navigation engine 250. The TPEG decoder 230 manages the tables in relation to the kinds and/or the types of the multimedia data:

The TPEG decoder 230 acquires location information corresponding to the current traffic information from the subsequent TPEG location container. According to the type information of the TPEG location container, the location information may be coordinate (longitude and latitude) of start and end points or the link, i.e., the link ID assigned to the road section.

When the storage structure 240 is equipped, the navigation engine 250 specifies a section corresponding to the received information in reference to the information relating to the links and the nodes in the storage structure 240, and if necessary, may utilize the coordinates of the received link by converting the coordinates to the link ID or converting the link ID to the coordinates.

The navigation engine 250 may read out from the storage structure 240 the digital map of a certain area based on the current coordinates which may be received from the GPS module 280, and may display the digital map on the display panel 270 via the panel drive 260. In doing so, the place corresponding to the current location may be marked by a specific graphical symbol.

The navigation engine 250 may control display of the section mean speed information received from the TPEG decoder 230 in the section corresponding to the coordinates or the link ID of the location container which follows the container carrying the section mean speed information. The section mean speed may be displayed by changing colors or indicating numbers to the corresponding sections. By way of example of the ordinary road, the red denotes 0∼10 km/h, the orange denotes 10∼20 km/h, the green denotes 20∼40 km/h, and the blue denotes more than 40 km/h.

A terminal without the storage structure 240 storing the digital map may display the section mean speed by colors or by numbers with respect to only links ahead of the current path. When the path of the vehicle having the navigation terminal is designated in advance, the section mean speed may be displayed with respect to the links along the path, rather than the links ahead.

According to the user's request, the navigation engine 250 may control the display panel 270 to display the section travel-time and the retardation of links received from the TPEG decoder 230, instead of or together with the section mean speed.

When the navigation engine 250 is equipped with a decoding module capable of reproducing the multimedia data, the navigation engine 250 may inform from the TPEG decoder 230, of the kind of the multimedia CTT component (e.g., audio component, video component, etc.), and the type of the corresponding multimedia data (e.g., GIF, BMP, etc. of the still image), and may control the decoding module. Thus, the multimedia data provided from the TPEG decoder 230 may be reproduced though the display panel 270 and/or a speaker.

If the multimedia data includes a video, the video may be displayed on the display panel 270 as a whole or in a small window on the display panel 270.

In light of the foregoing as set forth above, the traffic-related information is transmitted in the multimedia form so that the user may intuitively acquire the traffic conditions.

In broadcast systems that include interactive media, further steps may be included. In particular, a step of requesting a media format or other identifier, may be included. A media format identifier may be selected by a mobile station or other device.

Furthermore, since the traffic-related information is provided in the multimedia form without modifying the TPEG standard, the TPEG standard may be expanded.

Although various implementations have been shown and described, it will be appreciated that changes may be made in these implementations.

## Claims

1. A method for identifying and using traffic information including media information, the method comprising:
receiving traffic data for a location, the traffic data including a media object and a media-type identifier that enables a determination of a type associated with the media object;
determining, based on the media-type identifier, the type of the media object included within the received traffic data;
identifying the media object within the received traffic data; and
enabling retrieval of the media object based in part on the identified media object,
**characterized in that** the step of receiving traffic data comprises receiving traffic data which includes information corresponding to a version number of information reflected in the traffic data.

2. The method of claim 1, wherein media within the media object represents traffic conditions experienced at the location.

3. The method of claim 1, wherein media within the media object represents weather conditions experienced at the location.

4. The method of claim 1, wherein media within the media object represents attractions found at the location.

5. The method of anyone of claims 1 through 4, further comprising receiving an indication of a length of the received traffic data and a size related to the media object.

6. The method of anyone of claims 1 through 5, wherein: receiving traffic data for a location includes receiving a media-format identifier that enables determination of a format of the media object;
identifying the media object includes identifying, based on both of the determined type of the media object and the media-format identifier, the format of the media object included within the received traffic data; and enabling retrieval of the media object includes
enabling retrieval of the media object based in part on the identified format of the media object.

7. The method of claim 6, wherein the media-type identifier enables a determination that the media object is one of several media types indicated by the media-type identifier, wherein the several media types include at least one of audio media, visual media, video media, audio visual media, and hypertext media.

8. The method of claim 6 or 7, further comprising determining, based on the media-type identifier, that the media object is audio media.

9. The method of claim 8, further comprising determining, based on the determination that the media object is audio media and based on the media-format identifier included in the traffic data, whether the media object is formatted according to at least one of MPEG 1 audio layer I, MPEG I audio layer II, MPEG 1 audio layer III and uncompressed PCM audio.

10. The method of anyone of claims 6 through 9, further comprising determining, based on the media-type identifier, that the media object is visual media.

11. The method of claim 10 , further comprising determining, based on the determination that the media object is visual media and based on the media-format identifier included in the traffic data, whether the media object is formatted according to at least one of GIF , JFIF , BMP , PNG, and MNG.

12. The method of anyone of claims 6 through 11, further comprising determining, based on the media-type identifier, that the media object is video media.

13. The method of claim 12 , further comprising determining, based on the determination that the media object is visual media and based on the media-format identifier included in the traffic data, whether the media object is at least one of MPEG 1 video, MPEG 2 video, MPEG 4 video, H.263, and H.264.

14. The method of anyone of claims 6 through 13, further comprising determining, based on the media-type identifier, that the media object is audio visual media.

15. The method of claim 14, further comprising determining, based on the determination that the media object is audio visual media and based on the media-format identifier included in the traffic data, whether the media object is formatted according to at least one of AV1, ASF, WMV and MOV.

16. The method of anyone of claims 6 through 15, further comprising determining, based on the media-type identifier, that the media object is hypertext media.

17. The method of claim 16, further comprising determining, based on the determination that the media object is hypertext media and based on the media-format identifier included in the traffic data, whether the media object is at least one of HTML and XML.

18. The method of anyone of claims 6 through 17, further comprising receiving information corresponding to a message management structure including information corresponding to a generation time of information reflected in the traffic data.

19. The method of claim 18, wherein the generation time included within the received message management structure relates to a plurality of message component structures that correspond to more than one of a predicted or current traffic tendency, a predicted or current amount of traffic, a predicted or current speed, or a predicted or current time to traverse a particular link, wherein one or more of the message component structures is associated with the information corresponding to media.

20. A traffic information communication device for identifying and using traffic information including media information, comprising:
a data receiving interface configured to receive media information corresponding to a location including:
a media object, and
a media-type identifier that enables a determination of a type associated with the media object; and
a processing device configured to process the received media information,
**characterized in that** the processing device is configured to receive traffic data including information corresponding to a version number of information reflected in the traffic data.

21. The device of claim 20, wherein the media within the media object represents at least one of traffic conditions experienced at the location, weather conditions experienced at the location, and attractions found at the location.

22. The device of claim 20, wherein the version number is associated with a specific syntax of the data where any one of multiple syntaxes may be used.

23. The device of claim 20, wherein the processing device is configured to receive information corresponding to a message management structure including information corresponding to a generation time of information reflected in the traffic data.

24. The device of claim 20, wherein the processing device is configured to receive information corresponding to a length of the received data and an indication of size related to the media object.

25. The device of claim 20, wherein:
the data receiving interface is further configured to receive media information corresponding to a location including a media-format identifier that enables determination of a format of the media object; and
the processing device is further configured to process the received media information and to determine media information based at least in part on the information received.

26. The device of claim 25, wherein the processing device is configured to enable a determination, based on the media-type identifier, that the media object is one of several media types indicated by the media-type identifier, wherein the several media types include at least one of audio media, visual media, video media, audio visual media, and hypertext media.

27. The device of claim 25, wherein the processing device is configured to determine, based on the media-type identifier, that the media object is audio media.

28. The device of claim 27, wherein the processing device is configured to enable a determination, based on the determination that the media object is audio media and based on the media-format identifier included in the traffic data, of whether the media object is formatted according to at least one of MPEG 1 audio layer I, MPEG I audio layer II, MPEG 1 audio layer III and uncompressed PCM audio.

29. The device of claim 25, wherein the processing device is configured to determine, based on the media-type identifier, that the media object is visual media.

30. The device of claim 29, wherein the processing device is configured to enable a determination, based on the determination that the media object is visual media and based on the media-format identifier included in the traffic data, of whether the media object is formatted according to at least one of GIF, JFIF, BMP, PNG, and MNG.

31. The device of claim 25, wherein the processing device is configured to determine, based on the media-type identifier, that the media object is video media.

32. The device of claim 31, wherein the processing device is configured to enable a determination, based on the determination that the media object is visual media and based on the media-format identifier included in the traffic data, of whether the media object is at least one of MPEG 1 video, MPEG 2 video, MPEG 4 video, H.263, and H.264.

33. The device of claim 25, wherein the processing device is configured to determine, based on the media-type identifier, that the media object is audio visual media.

34. The device of claim 33, wherein the processing device is configured to enable a determination, based on the determination that the media object is audio visual media and based on the media-format identifier included in the traffic data, of whether the media object is formatted according to at least one of AV1, ASF, WMV and MOV.

35. The device of claim 25, wherein the processing device is configured to determine, based on the media-type identifier, that the media object is hypertext media.

36. The device of claim 35, wherein the processing device is configured to enable a determination, based on the determination that the media object is hypertext media and based on the media-format identifier included in the traffic data, of whether the media object is at least one of HTML and XML.

37. Device according to anyone of claims 20 through 36, wherein
the data receiving interface comprises means for receiving traffic data for the location, the traffic data including the media object and the media-type identifier ; and,
the processing device comprises
means for determining, based on the media-type identifier, the type of the media object included within the received traffic data;
means for identifying the media object within the received traffic data; and
means for enabling retrieval of the media object based in part on the identified media object.

38. The device of claim 37, wherein:
means for receiving traffic data for a location includes means for receiving a media-format identifier that enables determination of a format of the media object;
means for identifying the media object includes means for identifying, based on both of the determined type of the media object and the media-format identifier, the format of the media object included within the received traffic data; and
means for enabling retrieval of the media object includes means for enabling retrieval of the media object based in part on the identified format of the media object.

## Patentansprüche

1. Verfahren zum Identifizieren und Verwenden von Verkehrsinformation, die Medieninformation enthält, wobei das Verfahren die Schritte aufweist:
Empfangen von Verkehrsdaten für einen Ort, wobei die Verkehrsdaten ein Medienobjekt und eine Medientypidentifizierung enthalten, die eine Bestimmung eines dem Medienobjekt zugeordneten Typs ermöglicht;
Bestimmen des Typs des in den empfangenen Verkehrsdaten enthaltenen Medienobjekts basierend auf der Medientypidentifizierung;
Identifizieren des Medienobjekts in den empfangenen Verkehrsdaten; und
Ermöglichen einer Wiedergewinnung des Medienobjekts basierend teilweise auf dem identifizierten Medienobjekt;
**dadurch gekennzeichnet, dass**
der Schritt zum Empfangen von Verkehrsdaten das Empfangen von Verkehrsdaten aufweist, die Information enthalten, die einer Versionsnummer von in den Verkehrsdaten enthaltener Information entspricht.

2. Verfahren nach Anspruch 1, wobei Medien innerhalb des Medienobjekts am Ort vorliegende Verkehrszustände darstellen.

3. Verfahren nach Anspruch 1, wobei Medien innerhalb des Medienobjekts am Ort vorliegende Wetterbedingungen darstellen.

4. Verfahren nach Anspruch 1, wobei Medien innerhalb des Medienobjekts am Ort vorhandene Anziehungspunkte darstellen.

5. Verfahren nach einem der Ansprüche 1 bis 4, ferner mit dem Schritt zum Empfangen einer Längenanzeige der empfangenen Verkehrsdaten und einer mit dem Medienobjekt in Beziehung stehenden Größe.

6. Verfahren nach einem der Ansprüche 1 bis 5, wobei:
das Empfangen von Verkehrsdaten für einen Ort das Empfangen einer Medienformatidentifizierung aufweist, die die Bestimmung eines Formats des Medienobjekts ermöglicht;
das Identifizieren des Medienobjekts das Identifizieren des Formats des in den empfangenen Verkehrsdaten enthaltenen Medienobjekts basierend sowohl auf dem bestimmten Typ des Medienobjekts als auch auf der Medienformatidentifizierung aufweist; und das Ermöglichen einer Wiedergewinnung des Medienobjekts;
das Ermöglichen einer Wiedergewinnung des Medienobjekts basierend teilweise auf dem identifizierten Format des Medienobjekts aufweist.

7. Verfahren nach Anspruch 6, wobei durch die Medientypidentifizierung bestimmbar ist, dass das Medienobjekt einem von mehreren Medientypen zugeordnet ist, der durch die Medientypidentifizierung angezeigt wird, wobei die mehreren Medientypen mindestens eines der folgenden Medien aufweisen: Audiomedien, visuelle Medien, Videomedien, audiovisuelle Medien und Hypertext-Medien.

8. Verfahren nach Anspruch 6 oder 7, ferner mit dem Schritt zum Bestimmen, dass das Medienobjekt Audiomedien beschreibt, basierend auf der Medientypidentifizierung.

9. Verfahren nach Anspruch 8, ferner mit dem Schritt zum Bestimmen, ob das Medienobjekt gemäß mindestens einem der folgenden Formate formatiert ist: MPEG-1-Audio-schicht I, MPEG-1-Audioschicht II, MPEG-1-Audioschicht III und unkomprimierte PCM-Audiodaten, basierend auf der Bestimmung, dass das Medienobjekt Audiomedien beschreibt, und basierend auf der in den Verkehrsdaten enthaltenen Medienformatidentifizierung.

10. Verfahren nach einem der Ansprüche 6 bis 9, ferner mit dem Schritt zum Bestimmen, dass das Medienobjekt visuelle Medien beschreibt, basierend auf der Medientypidentifizierung.

11. Verfahren nach Anspruch 10, ferner mit dem Schritt zum Bestimmen, ob das Medienobjekt gemäß mindestens einem der folgenden Formate formatiert ist: GIF, JFIF, BMP, PNG und MNG, basierend auf der Bestimmung, dass das Medienobjekt visuelle Medien beschreibt, und basierend auf der in den Verkehrsdaten enthaltenen Medienformatidentifizierung.

12. Verfahren nach einem der Ansprüche 6 bis 11, ferner mit dem Schritt zum Bestimmen, das das Medienobjekt Videomedien beschreibt, basierend auf der Medientypidentifizierung.

13. Verfahren nach Anspruch 12, ferner mit dem Schritt zum Bestimmen, ob das Medienobjekt gemäß mindestens einem der folgenden Formate formatiert ist: MPEG-1-Video, MPEG-2-Video, MPEG-4-Video, H.263 und H.264, basierend auf der Bestimmung, dass das Medienobjekt visuelle Medien beschreibt, und basierend auf der in den Verkehrsdaten enthaltenen Medienformatidentifizierung.

14. Verfahren nach einem der Ansprüche 6 bis 13, ferner mit dem Schritt zum Bestimmen, dass das Medienobjekt audiovisuelle Medien beschreibt, basierend auf der Medientypidentifizierung.

15. Verfahren nach Anspruch 14, ferner mit dem Schritt zum Bestimmen, ob das Medienobjekt gemäß mindestens einem der folgenden Formate formatiert ist: AVI, ASF, WMV und MOV, basierend auf der Bestimmung, dass das Medienobjekt audiovisuelle Medien beschreibt, und basierend auf der in den Verkehrsdaten enthaltenen Medienformatidentifizierung.

16. Verfahren nach einem der Ansprüche 6 bis 15, ferner mit dem Schritt zum Bestimmen, dass das Medienobjekt Hypertext-Medien beschreibt, basierend auf der Medientypidentifizierung.

17. Verfahren nach Anspruch 16, ferner mit dem Schritt zum Bestimmen, ob das Medienobjekt gemäß mindestens einem der folgenden Formate formatiert ist: HTML und XML, basierend auf der Bestimmung, dass das Medienobjekt Hypertextmedien beschreibt, und basierend auf der in den Verkehrsdaten enthaltenen Medienformatidentifizierung.

18. Verfahren nach einem der Ansprüche 6 bis 17, ferner mit dem Schritt zum Empfangen von Information, die einer Nachrichtenmanagementstruktur entspricht, die Information enthält, die der Erzeugungszeit von in den Verkehrsdaten enthaltener Information entspricht.

19. Verfahren nach Anspruch 18, wobei die in der empfangenen Nachrichtenmanagementstruktur enthaltene Erzeugungszeit mit mehreren Nachrichtenkomponentenstrukturen in Beziehung steht, die mehr als einem der folgenden Elemente entsprechen: einer vorhergesagten oder aktuellen Verkehrstendenz, einem vorhergesagten oder aktuellen Verkehrsaufkommen, einer vorhergesagten oder aktuellen Geschwindigkeit oder einer vorhergesagten oder aktuellen Zeit zum Durchlaufen einer bestimmten Verbindung, wobei eine oder mehrere der Nachrichtenkomponentenstrukturen der Medien entsprechenden Information zugeordnet ist.

20. Verkehrsinformationskommunikationsvorrichtung zum Identifizieren und Verwenden von Verkehrsinformation, die Medieninformation enthält, mit:
einer Datenempfangsschnittstelle, die dafür konfiguriert ist, einem Ort entsprechende Medieninformation zu empfangen, wobei die Medieninformation enthält:
ein Medienobjekt; und
eine Medientypidentifizierung, die eine Bestimmung eines dem Medienobjekt zugeordneten Typs ermöglicht; und
mit einer Verarbeitungseinrichtung, die dafür konfiguriert ist, die empfangene Medieninformation zu verarbeiten,
**dadurch gekennzeichnet, dass**
die Verarbeitungseinrichtung dafür konfiguriert ist, Verkehrsdaten zu empfangen, die Information enthalten, die einer Versionsnummer von in den Verkehrsdaten enthaltener Information entspricht.

21. Vorrichtung nach Anspruch 20, wobei die Medien innerhalb des Medienobjekts am Ort vorliegende Verkehrszustände und/oder am Ort vorliegende Wetterbedingungen und/oder am Ort vorhandene Anziehungspunkte darstellen.

22. Vorrichtung nach Anspruch 20, wobei der Versionsnummer eine spezifische Syntax der Daten zugeordnet ist, wobei eine beliebige von mehreren Syntaxen verwendbar ist.

23. Vorrichtung nach Anspruch 20, wobei die Verarbeitungseinrichtung dafür konfiguriert ist, Information zu empfangen, die einer Nachrichtenmanagementstruktur entspricht, die Information enthält, die einer Erzeugungszeit von in den Verkehrsdaten enthaltener Information entspricht.

24. Vorrichtung nach Anspruch 20, wobei die Verarbeitungseinrichtung dafür konfiguriert ist, Information, die einer Länge der empfangenen Daten entspricht, und eine mit dem Medienobjekt in Beziehung stehende Größenanzeige zu empfangen.

25. Vorrichtung nach Anspruch 20, wobei:
die Datenempfangsschnittstelle ferner dafür konfiguriert ist, einem Ort entsprechende Medieninformation zu empfangen, die eine Medienformatidentifizierung enthält, die eine Bestimmung eines Format des Medienobjekts ermöglicht; und
wobei die Verarbeitungseinrichtung ferner dafür konfiguriert ist, die empfangene Medieninformation zu verarbeiten und basierend mindestens teilweise auf der empfangenen Information Medieninformation zu bestimmen.

26. Vorrichtung nach Anspruch 25, wobei die Verarbeitungseinrichtung dafür konfiguriert ist, basierend auf der Medientypidentifizierung zu bestimmen, dass das Medienobjekt einen von mehreren Medientypen beschreibt, der durch die Medientypidentifizierung angezeigt wird, wobei die mehreren Medientypen mindestens eines der folgenden Medien aufweisen: Audiomedien, visuelle Medien, Videomedien, audiovisuelle Medien und Hypertext-Medien.

27. Vorrichtung nach Anspruch 25, wobei die Verarbeitungseinrichtung dafür konfiguriert ist, basierend auf der Medientypidentifizierung zu bestimmen, dass das Medienobjekt Audiomedien beschreibt.

28. Vorrichtung nach Anspruch 25, wobei die Verarbeitungseinrichtung dafür konfiguriert ist, basierend auf der Bestimmung, dass das Medienobjekt Audiomedien beschreibt, und basierend auf der in den Verkehrsdaten enthaltenen Medienformatidentifizierung zu bestimmen, ob das Medienobjekt gemäß mindestens einem der folgenden Formate formatiert ist: MPEG-1-Audioschicht I, MPEG-1-Audioschicht II, MPEG-1-Audioschicht III und unkomprimierte PCM-Audiodaten.

29. Vorrichtung nach Anspruch 25, wobei die Verarbeitungseinrichtung dafür konfiguriert ist, basierend auf der Medientypidentifizierung zu bestimmen, dass das Medienobjekt visuelle Medien beschreibt.

30. Vorrichtung nach Anspruch 29, wobei die Verarbeitungseinrichtung dafür konfiguriert ist, basierend auf der Bestimmung, dass das Medienobjekt visuelle Medien beschreibt, und basierend auf der in den Verkehrsdaten enthaltenen Medienformatidentifizierung zu bestimmen, ob das Medienobjekt gemäß mindestens einem der folgenden Formate formatiert ist: GIF, JFIF, BMP, PNG und MNG.

31. Vorrichtung nach Anspruch 25, wobei die Verarbeitungseinrichtung dafür konfiguriert ist, basierend auf der Medientypidentifizierung zu bestimmen, dass das Medienobjekt visuelle Medien beschreibt.

32. Vorrichtung nach Anspruch 31, wobei die Verarbeitungseinrichtung dafür konfiguriert ist, basierend auf der Bestimmung, dass das Medienobjekt visuelle Medien beschreibt, und basierend auf der in den Verkehrsdaten enthaltenen Medienformatidentifizierung zu bestimmen, ob das Medienobjekt gemäß mindestens einem der folgenden Formate formatiert ist: MPEG-1-Video, MPEG-2-Video, MPEG-4-Video, H.263 und H.264.

33. Vorrichtung nach Anspruch 25, wobei die Verarbeitungseinrichtung dafür konfiguriert ist, basierend auf der Medientypidentifizierung zu bestimmen, dass das Medienobjekt audiovisuelle Medien beschreibt.

34. Vorrichtung nach Anspruch 33, wobei die Verarbeitungseinrichtung dafür konfiguriert ist, basierend auf der Bestimmung, dass das Medienobjekt audiovisuelle Medien beschreibt, und basierend auf der in den Verkehrsdaten enthaltenen Medienformatidentifizierung zu bestimmen, ob das Medienobjekt gemäß mindestens einem der folgenden Formate formatiert ist: AVI, ASF, WMV und MOV.

35. Vorrichtung nach Anspruch 25, wobei die Verarbeitungseinrichtung dafür konfiguriert ist, basierend auf der Medientypidentifizierung zu bestimmen, dass das Medienobjekt Hypertext-Medien beschreibt.

36. Vorrichtung nach Anspruch 35, wobei die Verarbeitungseinrichtung dafür konfiguriert ist, basierend auf der Bestimmung, dass das Medienobjekt Hypertext-Medien beschreibt, und basierend auf der in den Verkehrsdaten enthaltenen Medienformatidentifizierung zu bestimmen, ob das Medienobjekt gemäß mindestens einem der folgenden Formate formatiert ist: HTML und XML.

37. Vorrichtung nach einem der Ansprüche 20 bis 36, wobei
die Datenempfangsschnittstelle eine Einrichtung zum Empfangen von Verkehrsdaten für den Ort aufweist, wobei die Verkehrsdaten das Medienobjekt und die Medientypidentifizierung enthalten; und
wobei die Verarbeitungseinrichtung aufweist:
eine Einrichtung zum Bestimmen des Typs des in den empfangenen Verkehrsdaten enthaltenen Medienobjekts basierend auf der Medientypidentifizierung;
eine Einrichtung zum Identifizieren des Medienobjekts in den empfangenen Verkehrsdaten; und
eine Einrichtung zum Ermöglichen der Wiedergewinnung des Medienobjekts basierend teilweise auf dem identifizierten Medienobjekt.

38. Vorrichtung nach Anspruch 37, wobei
die Einrichtung zum Empfangen von Verkehrsdaten für einen Ort eine Einrichtung zum Empfangen einer Medienformatidentifizierung aufweist, die die Bestimmung eines Formats des Medienobjekts ermöglicht;
die Einrichtung zum Identifizieren des Medienobjekts eine Einrichtung zum Identifizieren des Formats des in den empfangenen Verkehrsdaten enthaltenen Medienobjekts basierend sowohl auf dem bestimmten Typ des Medienobjekts als auch auf der Medienformatidentifizierung aufweist; und
die Einrichtung zum Ermöglichen einer Wiedergewinnung des Medienobjekts eine Einrichtung zum Ermöglichen einer Wiedergewinnung des Medienobjekts basierend teilweise auf dem identifizierten Format des Medienobjekts aufweist.

## Revendications

1. Procédé destiné à identifier et utiliser des informations de circulation comprenant des informations de media, le procédé comprenant les étapes consistant à :
recevoir des données de circulation pour un lieu, les données de circulation comprenant un objet de media et un identifiant de type de media qui permet une détermination d'un type associé à l'objet de media ;
déterminer, sur la base de l'identifiant de type de media, le type de l'objet de media inclus dans les données de circulation reçues ;
identifier l'objet de media à l'intérieur des données de circulation reçues ; et
permettre l'extraction de l'objet de media sur la base en partie de l'objet de media identifié,
**caractérisé en ce que** l'étape de réception de données de circulation comprend la réception de données de circulation comprenant des informations correspondant à un numéro de version des informations reflétées dans les données de circulation.

2. Procédé selon la revendication 1, dans lequel le media à l'intérieur de l'objet de media représente des conditions de circulation rencontrées au lieu.

3. Procédé selon la revendication 1, dans lequel le media à l'intérieur de l'objet de media représente des conditions météorologiques rencontrées au lieu.

4. Procédé selon la revendication 1, dans lequel le media à l'intérieur de l'objet de media représente des attractions trouvées au niveau du lieu.

5. Procédé selon l'une quelconque des revendications 1 à 4, comprenant en outre l'étape consistant à recevoir une indication d'une longueur des données de circulation reçues et une taille relative à l'objet de media.

6. Procédé selon l'une quelconque des revendications 1 à 5, dans lequel
l'étape de réception de données de circulation pour un lieu comprend la réception d'un identifiant de format de media qui permet la détermination d'un format de l'objet de média ;
l'étape d'identification de l'objet de media comprend l'identification, sur la base à la fois du type déterminé de l'objet de media et de l'identifiant de format de media, du format de l'objet de media inclus dans les données de circulation reçues ; et
l'étape permettant l'extraction de l'objet de media comprend la permission de l'extraction de l'objet de media sur la base en partie du format identifié de l'objet de media.

7. Procédé selon la revendication 6, dans lequel l'identifiant de type de media permet de déterminer que l'objet de media est l'un parmi plusieurs types de media indiqué par l'identifiant de type de media, dans lequel les plusieurs types de media comprennent au moins l'un d'un media audio, d'un media visuel, d'un media vidéo, d'un media audiovisuel et d'un media hypertexte.

8. Procédé selon la revendication 6 ou 7, comprenant en outre l'étape consistant à déterminer, sur la base de l'identifiant de type de media, que l'objet de media est un media audio.

9. Procédé selon la revendication 8, comprenant en outre l'étape consistant à déterminer, sur la base de la détermination que l'objet de media est un media audio et sur la base de l'identifiant de format de media inclus dans les données de circulation, si l'objet de media est formaté selon au moins l'un parmi les formats MPEG 1 couche audio I, MPEG 1 couche audio II, MPEG 1 couche audio III et audio PCM non compressé.

10. Procédé selon l'une quelconque des revendications 6 à 9, comprenant en outre l'étape consistant à déterminer, sur la base de l'identifiant de type de media, que l'objet de media est un media visuel.

11. Procédé selon la revendication 10, comprenant en outre l'étape consistant à déterminer, sur la base de la détermination que l'objet de media est un media visuel et sur la base de l'identifiant de format de media inclus dans les données de circulation, si l'objet de media est formaté selon au moins l'un parmi les supports GIF, JFIF, BMP, PNG et MNG.

12. Procédé selon l'une quelconque des revendications 6 à 11, comprenant en outre l'étape consistant à déterminer, sur la base de l'identifiant de type de media, que l'objet de media est un media vidéo.

13. Procédé selon la revendication 12, comprenant en outre l'étape consistant à déterminer, sur la base de la détermination que l'objet de media est un media vidéo et sur la base de l'identifiant de format de media inclus dans les données de circulation, si l'objet de media est au moins l'un parmi les formats MPEG 1 vidéo, MPEG 2 vidéo, MPEG 4 vidéo, H.263 et H.264.

14. Procédé selon l'une quelconque des revendications 6 à 13, comprenant en outre l'étape consistant à déterminer, sur la base de l'identifiant de type de media, que l'objet de media est un media audiovisuel.

15. Procédé selon la revendication 14, comprenant en outre l'étape consistant à déterminer, sur la base de la détermination que l'objet de media est un media audiovisuel et sur la base de l'identifiant de format de media inclus dans les données de circulation, si l'objet de media est formaté selon au moins l'un des formats AVI, ASF, WMV et MOV.

16. Procédé selon l'une quelconque des revendications 6 à 15, comprenant en outre l'étape consistant à déterminer, sur la base de l'identifiant de type de media, que l'objet de media est un media hypertexte.

17. Procédé selon la revendication 16, comprenant en outre l'étape consistant à déterminer, sur la base de la détermination que l'objet de media est un media hypertexte et sur la base de l'identifiant de format de media inclus dans les données de circulation, si l'objet de media est formaté selon au moins l'un des formats HTML et XML.

18. Procédé selon l'une quelconque des revendications 6 à 17, comprenant en outre l'étape consistant à recevoir des informations correspondant à une structure de gestion de message comprenant des informations correspondant à un temps de génération des informations reflétées dans les données de circulation.

19. Procédé selon la revendication 18, dans lequel le temps de génération inclus dans la structure de gestion de message reçu concerne une pluralité de structures de composants de message correspondant à plusieurs informations parmi une tendance de circulation prédite ou actuelle, un volume de circulation prédit ou actuel, une vitesse prédite ou actuelle, ou un temps prédit ou actuel de traversée d'une liaison particulière, dans lequel une ou plusieurs des structures de composants de message sont associées aux informations correspondant au media.

20. Dispositif de communication d'informations de circulation pour identifier et utiliser des informations de circulation comprenant des informations de media, comprenant :
une interface de réception de données configurée pour recevoir des informations de media correspondant à un lieu comprenant :
- un objet de media, et
- un identifiant de type de media qui permet une détermination d'un type associé à l'objet de media ; et
un dispositif de traitement configuré pour traiter les informations de media reçues,
**caractérisé en ce que** le dispositif de traitement est configuré pour recevoir des données de circulation comprenant des informations correspondant à un numéro de version des informations reflétées dans les données de circulation.

21. Dispositif selon la revendication 20, dans lequel le media à l'intérieur de l'objet de media représente au moins l'une parmi les informations relatives aux conditions de circulation rencontrées au niveau du lieu, aux conditions météorologiques rencontrées au niveau du lieu, et aux attractions trouvées au lieu.

22. Dispositif selon la revendication 20, dans lequel le numéro de version est associé à une syntaxe spécifique des données quand l'une quelconque parmi de multiples syntaxes peut être utilisée.

23. Dispositif selon la revendication 20, dans lequel le dispositif de traitement est configuré pour recevoir des informations correspondant à une structure de gestion de message comprenant des informations correspondant à un temps de génération des informations reflétées dans les données de circulation.

24. Dispositif selon la revendication 20, dans lequel le dispositif de traitement est configuré pour recevoir des informations correspondant à une longueur des données reçues et une indication de taille relative à l'objet de media.

25. Dispositif selon la revendication 20, dans lequel :
l'interface de réception de données est en outre configurée pour recevoir des informations de media correspondant à un lieu comprenant un identifiant de format de media qui permet la détermination d'un format de l'objet de média ; et
le dispositif de traitement est en outre configuré pour traiter les informations de media reçues et pour déterminer les informations de media sur la base au moins en partie des informations reçues.

26. Dispositif selon la revendication 25, dans lequel le dispositif de traitement est configuré pour permettre une détermination, sur la base de l'identifiant de type de media, que l'objet de media est l'un parmi plusieurs types de media indiqué par l'identifiant de type de media, dans lequel les plusieurs types de media comprennent au moins l'un parmi un media audio, un media visuel, un media vidéo, un media audiovisuel et un media hypertexte.

27. Dispositif selon la revendication 25, dans lequel le dispositif de traitement est configuré pour déterminer, sur la base de l'identifiant de type de media, que l'objet de media est un media audio.

28. Dispositif selon la revendication 27, dans lequel le dispositif de traitement est configuré pour permettre de déterminer, sur la base de la détermination que l'objet de media est un media audio et sur la base de l'identifiant de format de media inclus dans les données de circulation, si l'objet de media est formaté selon au moins l'un parmi les formats MPEG 1 couche audio I, MPEG 1 couche audio II, MPEG 1 couche audio III et audio PCM non compressé.

29. Dispositif selon la revendication 25, dans lequel le dispositif de traitement est configuré pour déterminer, sur la base de l'identifiant de type de media, que l'objet de media est un media visuel.

30. Dispositif selon la revendication 29, dans lequel le dispositif de traitement est configuré pour permettre de déterminer, sur la base de la détermination que l'objet de media est un media visuel et sur la base de l'identifiant de format de media inclus dans les données de circulation, si l'objet de media est formaté selon au moins l'un des formats GIF, JFIF, BMP, PNG et MNG.

31. Dispositif selon la revendication 25, dans lequel le dispositif de traitement est configuré pour déterminer, sur la base de l'identifiant de type de media, que l'objet de media est un media vidéo.

32. Dispositif selon la revendication 31, dans lequel le dispositif de traitement est configuré pour permettre de déterminer, sur la base de la détermination que l'objet de media est un media vidéo et sur la base de l'identifiant de format de media inclus dans les données de circulation, si l'objet de media est au moins l'un parmi les formats MPEG 1 vidéo, MPEG 2 vidéo, MPEG 4 vidéo, H.263 et H.264.

33. Dispositif selon la revendication 25, dans lequel le dispositif de traitement est configuré pour déterminer, sur la base de l'identifiant de type de media, que l'objet de media est un media audiovisuel.

34. Dispositif selon la revendication 33, dans lequel le dispositif de traitement est configuré pour permettre de déterminer, sur la base de la détermination que l'objet de media est un media audiovisuel et sur la base de l'identifiant de format de media inclus dans les données de circulation, si l'objet de media est formaté selon au moins l'un des formats AVI, ASF, WMV et MOV.

35. Dispositif selon la revendication 25, dans lequel le dispositif de traitement est configuré pour déterminer, sur la base de l'identifiant de type de media, que l'objet de media est un media hypertexte.

36. Dispositif selon la revendication 35, dans lequel le dispositif de traitement est configuré pour permettre de déterminer, sur la base de la détermination que l'objet de media est un media hypertexte et sur la base de l'identifiant de format de media inclus dans les données de circulation, si l'objet de media est formaté selon au moins un format parmi HTML et XML.

37. Dispositif selon l'une quelconque des revendications 20 à 36, dans lequel :
l'interface de réception de données comprend des moyens pour recevoir des données de circulation pour le lieu, les données de circulation comprenant l'objet de media et
l'identifiant de type de média ; et
le dispositif de traitement comprend
- des moyens pour déterminer, sur la base de l'identifiant de type de media, le type de l'objet de media inclus dans les données de circulation reçues ;
- des moyens pour identifier l'objet de media à l'intérieur des données de circulation reçues ; et
- des moyens pour permettre l'extraction de l'objet de media sur la base en partie de l'objet de media identifié,

38. Dispositif selon la revendication 37, dans lequel :
les moyens pour recevoir les données de circulation pour un lieu comprennent des moyens pour recevoir un identifiant de format de media qui permet de déterminer un format de l'objet de média ;
les moyens pour identifier l'objet de media comprennent des moyens pour identifier, sur la base à la fois du type déterminé de l'objet de media et de l'identifiant de format de media, le format de l'objet de media inclus dans les données de trafic reçues ; et
les moyens pour permettre l'extraction de l'objet de media comprennent des moyens pour permettre l'extraction de l'objet de media sur la base en partie du format identifié de l'objet de media.
